# EUROPÄISCHE PATENTSCHRIFT

(11) **EP 0 972 889 B1**
(45) Veröffentlichungstag und Bekanntmachung des Hinweises auf die Patenterteilung: **08.08.2001**
(21) Anmeldenummer: 99105832.2
(22) Anmeldetag: 23.03.1999
(51) Int. Cl.: E04F 13/02, B44C 7/00, B32B 31/12, B32B 33/00, B32B 31/00, B32B 35/00

(54) **Wand- und Deckenbeschichtungssystem auf Basis eines Farblackes**
Coating system for walls and ceilings based on colored lacquer coating
Système de revêtement pour murs et plafonds à base d'un revêtement laqué coloré

(30) Priorität: 17.07.1998 DE 29812797 U
(43) Veröffentlichungstag der Anmeldung: 19.01.2000
(73) Patentinhaber: Schmidt, Heike, 99817 Eisenach (DE); Göbhardt, Thomas, 99817 Eisenach (DE); Rödiger, Arndt, 99817 Eisenach (DE)
(72) Erfinder: Schmidt, Heike, 99817 Eisenach (DE); Göbhardt, Thomas, 99817 Eisenach (DE); Rödiger, Arndt, 99817 Eisenach (DE)
(74) Vertreter: Späth, Volker

(56) Entgegenhaltungen:
- DE-A- 4 212 925
- DE-A- 19 519 923
- NL-A- 7 214 459

## Beschreibung

Die Erfindung betrifft ein Wand- und Deckenbeschichtungssystem zur Oberflächenmodifizierung von Wänden und Decken von Räumen verschiedenster Bauten wie solchen von Wohn- und Gewerberäumen oder von öffentlichen Einrichtungen wie Verwaltungsgebäuden, Kinos, Theater, Diskotheken, Galerien, Museen usw..

Wand- und Deckenbeschichtungssysteme variabler Art sind vielfältig bekannt. Sowohl farblich gestaltete oder strukturierte Tapeten (Rauhfaser, Glasgewebe) als auch unterschiedliche Verfahren (Marmortechnik, Wickeltechnik) finden zunehmend Anwendung. Diese Verfahren erzielen ihre Wirkung durch die Art und Weise des Auftragens der Deckschicht. So werden Farbeffekte z.B. durch nicht flächendeckenden Farbauftrag oder Teilspachtelungen erzielt.
So ist hierzu aus der Patentschrift DE 195 19 923 A1 ein Verfahren zur Oberflächenmodifizierung von Substraten bekannt, nach dem auf die Oberfläche des Substrates ein Lack aufgetragen wird. In die noch flüssige Lackschicht wird eine saugfähige Papierlage mittels einer Andrückrolle eingedrückt und eingebettet. Die Papierlage kann farbig, gemustert, ungefärbt oder mit einer verschleißfesten Oberfläche versehen sein. Die so entstehende feuchte Schicht ist bei Verwendung von ungefärbtem Papier transparent. Die Schicht wird mittels UV-Strahlung oder mittels Elektronenstrahlen ausgehärtet. Weiterhin sind aus der Patentschrift DE 44 42 968 A1 ein Holzimitathalberzeugnis und das Verfahren zu seiner Herstellung bekannt, wonach auf die fertig bearbeitete Oberfläche des Substrates eine flüssige Grundschicht aufgebracht und getrocknet wird. Danach wird ein Holzmaserungsmuster aufgetragen und eingefärbt. Eine danach aufgetragene polymerisierbare Schutzschicht versiegelt das Substrat und ist dafür angepaßt, einen durch einen Endverbraucher aufzubringenden Farbstoff aufzunehmen.
In der Patentschrift DE 33 34 961 C2 ist ein Verfahren zur Herstellung einer mehrschichtigen Beschichtung bekannt, wobei man auf eine weiße oder graue Zwischenbeschichtung eine gefärbte Deckbeschichtung unvollständig deckend aufträgt, so daß sich eine der Farben der vollständig deckend aufgetragenen Deckbeschichtung sehr ähnliche Farbe ergibt. Hierzu werden verschiedene Schichtdicken der Zwischenbeschichtung und der Deckbeschichtung vorgeschlagen, die die erforderliche Deckungsgüte und Farbbrillanz gewährleisten. Die beschriebenen Beschichtungssysteme beziehen sich immer auf spezielle Anwendungsfälle, sind aufwändig und teuer.

Aufgabe der Erfindung ist die Schaffung eines weiteren preisgünstigen und unkompliziert anwendbaren Beschichtungssystems für Wände und Decken, das Rißbildungen der Oberfläche vermeidet, dessen Oberfläche scheuerbeständig und abriebfest ist und beliebig weiter behandelt werden kann und das eine gleichmäßige angenehme farbliche Strukturierung gewährleistet.

Diese Aufgabe wird erfindungsgemäß dadurch gelöst, daß auf einer grundierten, geglätteten und nochmals grundierten Außenfläche eines Substrates beispielsweise der Putzschicht einer Wand- oder Deckenfläche eine Farbschicht, ein Gewebekleber, ein Glasvlies und eine farblose Deckschicht angeordnet sind. Die Farbschicht ist variierbar. Das Glasvlies kann phosphorisierend sein. Es kann eingefärbt sein und auf einer beliebigen Farbschicht aufgebracht werden. Es kann aber auch unterschiedliche Strukturen aufweisen und ist mit einer Deckschicht versehen, die als Schutzschicht fungiert.

Die Erfindung soll nachstehend an einem Ausführungsbeispiel näher erläutert werden.
In der zugehörigen Zeichnung ist die Erfindung im Schnitt dargestellt.
Das erfindungsgemäße Wand- und Deckenbeschichtungssystem besteht im wesentlichen aus einem Substrat 1, einer Farbschicht 2, einer Schicht Gewebekleber 3 und einer Schicht Glasvlies 4.
Hierzu ist die Außenfläche des Substrates 1, das vorteilhaft das Mauerwerk bzw. die Putzschicht von Wänden oder Decken verschiedenster Bauten sein kann, mit einem lösungsmittelfreien Tiefengrund (150-200 ml/m²) grundiert worden. Danach wird diese Fläche bis zur völligen Glätte gespachtelt und anschließend nochmals geschliffen und grundiert. Die so behandelte Fläche wird mit einer Farbschicht 2 versehen, die von einer durch Streichen, Spritzen usw. aufgebrachten Dispersionsfarbe mit gewünschtem satten Farbton gebildet wird. Die Farbschicht 2 ist mit einem Gewebekleber 3 vollständig beschichtet, auf dem ein Glasvlies 4 auf Stoß eingebettet ist. Durch Feststreichen bzw. Rollen mit einer Andrückrolle 5 wird erreicht, daß der Gewebekleber 3 in die Struktur des Glasvlieses 4 eindringt und somit eine feste glatte Oberfläche entsteht. Nach einer Aushärtezeit von ca. 24 Stunden wird das Glasvlies 4 mit einer farblosen Lackschicht 6 auf vorzugsweise Acryl- oder Latexbasis überzogen. Sie ist abrieb- und scheuerbeständig und dient letztlich als versiegelnde Schutzschicht.

Die so entstandene Oberfläche kann beliebig weiter behandelt werden.
Durch Variationen der Farbintensität der Farbschicht 2 von schwach bis stark können besondere Effekte wie Himmelswirkung z.B. für Einkaufszentren erzielt werden.
Besondere Lichteffekte werden durch Anstrahlung bei Verwendung von phosphorisierenden Glasvliesen 4 erreicht. Ein solches Beschichtungssystem eignet sich beispielsweise für die Ausstattung von Decken in Diskotheken. Ein eingefärbtes Glasvlies 4 auf beliebigem farblichen Untergrund eignet sich für Foyerbereiche aller Art.
Zur Erreichung besonderer Strukturwirkung können Glasvliese 4 unterschiedlicher Strukturintensität verwendet werden.
Die Verwendung des erfindungsgemäßen Wand- und Deckenbeschichtungssystems hat außerdem den Vorteil, daß Rißbildungen infolge von Spannungen im Untergrund durch die Elastizität des Glasvlieses 4 vermieden werden. Es ist problemlos und kostengünstig realisierbar.

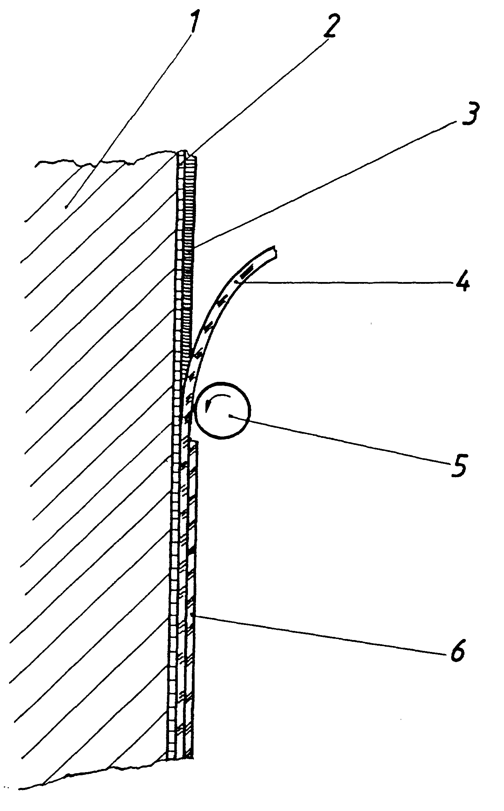

## Patentansprüche

1. Wand- und Deckenbeschichtungssystem, bestehend aus einer Trägerschicht, einer Lackschicht, einer saugfähigen Zwischenlage und einer Schutzschicht, dadurch gekennzeichnet, daß auf einer grundierten, geglätteten und nochmals grundierten Fläche eines Substrares (1) eine Farbschicht (2), eine Schicht Gewebekleber (3), ein Glasvlies (4) und eine farblose Deckschicht (6) angeordnet sind.

2. Wand- und Deckenbeschichtungssystem nach Anspruch 1, dadurch gekennzeichnet, daß die Farbschicht (2) im Farbton variierbar ist.

3. Wand- und Deckenbeschichtungssystem nach Anspruch 1 bis 2, dadurch gekennzeichnet, daß das Glasvlies (4) phosphorisierend ist.

4. Wand- und Deckenbeschichtungssystem nach Anspruch 1 bis 3, dadurch gekennzeichnet, daß das Glasvlies (4) eingefärbt und auf beliebiger Farbschicht (2) aufgebracht ist.

5. Wand- und Deckenbeschichtungssystem nach Anspruch 1 bis 4, dadurch gekennzeichnet, daß das Glasvlies (4) unterschiedliche Struktur aufweist.

6. Wand- und Deckenbeschichtungssystem nach Anspruch 1 bis 5, dadurch gekennzeichnet, daß das Glasvlies (4) mit einer transparenten Lackschicht (6) versehen ist.

## Claims

1. An coating system for walls and ceilings comprising:
a support layer, a lacquer layer, an absorbent intermediate support and an protective layer,
wherein on an a primed, smoothed and then once more primed surface of a substrate (1) a layer of paint (2), a layer of textile adhesive (3), a glass fleece (4) and a colourless top layer (6) are arranged.

2. An coating system for walls and ceilings according to claim 1, wherein the layer of paint (2) is variable concerning the shade.

3. An coating system for walls and ceilings according to claim 1 and 2, wherein the glass fleece (4) is phosphorescent.

4. An coating system for walls and ceilings according to claim 1 to 3, wherein the glass fleece (4) is dyed and is coated an optional layer of paint (2).

5. An coating system for walls and ceilings according to claim 1 to 4, wherein the glass fleece (4) has different structures.

6. An coating system for walls and ceilings according to claim 1 to 5, wherein the glass fleece (4) has a transparent lacquer layer (6).

## Revendications

1. support, d'une couche de laque, d'une couche intermédiaire absorbante et d'une couche de protection, caractérisé par le fait qu'une base (1), une couche de couleur (2), une couche de colle pour tissu (3), une toison en verre (4) et une couche de recouvrement incolore (8) sont disposées sur une surface recouverte d'une couche de fond, lissée et recouverte ensuite d'une nouvelle couche de fond.

2. Système de revêtement de murs et de plafond, selon exigence 1, caractérisé par le fait que la couche de couleur (2) peut varier dans sa nuance de couleur.

3. Système de revêtement de murs et de plafond, selon exigence 1 à 2, caractérisé par le fait que la toison de verre (4) est phosphorescente.

4. Système de revêtement de murs et de plafond, selon exigence 1 à 3, caractérisé par le fait que la toison de verre (4) est colorée et appliquée sur une couche de couleur (2) au choix.

5. Système de revêtement de murs et de plafond, selon exigence 1 à 4, caractérisé par le fait que la toison de verre (4) peut avoir différentes structures.

6. Système de revêtement de murs et de plafond, selon exigence 1 à 5, caractérisé par le fait que la toison de verre (4) est équipée d'une couche de laque (6) transparente.
